# EUROPEAN PATENT SPECIFICATION

(11) **EP 1 666 925 B1**
(45) Date of publication and mention of the grant of the patent: **14.03.2007**
(21) Application number: 04772821.7
(22) Date of filing: 30.08.2004
(51) Int. Cl.: G02B 5/128, E01F 9/00, B32B 7/02, B32B 27/00, B32B 27/30

(54) **RETROREFLECTION SHEET PROVIDED WITH BREAKABLE LAYER**
RETROREFLEXIONS-BLATT MIT EINER ZERBRECHBAREN SCHICHT
FEUILLE DE RETROREFLEXION POURVUE D'UNE COUCHE CASSABLE

(30) Priority: 29.08.2003 JP 2003209580
(43) Date of publication of application: 07.06.2006
(73) Proprietor: NIPPON CARBIDE KOGYO KABUSHIKI KAISHA, Tokyo 108-8466 (JP)
(72) Inventor: NOMURA, Futoshi, Toyama-shi, Toyama 939-3551 (JP); MIMURA, Ikuo, Uozu-shi, Toyama 937-0061 (JP)
(74) Representative: Albrecht, Thomas
(86) International application number: PCT/JP2004/012872
(87) International publication number: WO 2005/022211

(56) References cited:
- WO-A2-02/071376
- JP-A- 8 262 208
- JP-A- 10 097 172
- JP-A- 2001 063 292
- JP-A- 2001 130 179
- JP-A- 2001 215 304
- JP-A- 2001 324 602
- JP-A- 2003 029 012
- JP-A- 2003 128 809
- US-A- 5 629 093
- US-A- 5 658 411

## Description

### Technical Field

This invention relates to a retroreflective sheeting having novel construction. More specifically, the invention relates to a retroreflective sheeting characterized in that a destructive layer is provided therein as a part thereof.

Still more specifically, the invention relates to a retroreflective sheeting which is provided with a destructive layer, the sheeting comprising at least a surface layer, retroreflective element layer and an adhesive layer, characterized in that at least one destructive layer is provided between the layers constituting the retroreflective sheeting, the resin constituting said destructive layer being alicyclic polyolefin resin or alicyclic acrylic resin; and when the retroreflective sheeting which is once stuck on a substrate is peeled off from the substrate, the peeling takes place at the interface of the destructive layer and the layer which is in intimate contact therewith, and/or by destruction of the destructive layer.

The invention relates to a retroreflective sheeting provided with a destructive layer, which is useful for signs such as traffic signs and construction signs; number plates on vehicles such as cars and motorcycles; safety materials such as clothing and life preservers; marking on signboards; various kinds of authentication stickers; reflector plates in visible light-, laser light-, or infrared light-reflection type sensors; and the like.

Still more specifically, the invention relates to a retroreflective sheeting to be used in various kinds of authentication stickers, which, when it is peeled off from a substrate to which it was once adhered, in an attempt to use it for other purposes, it is broken because of the destructive layer provided as a part thereof to render its reuse impossible. (This effect may be hereafter referred to as tampering preventing effect or re-peeling preventing effect.)

More specifically, the invention aims at providing a retroreflective sheeting in which a destructive layer is provided, which is useful for making tampering preventing stickers durable under use at high temperatures over time and capable of maintaining stable tampering preventing effect.

### Background Art

Retroreflective sheeting which reflects entering light toward its light source is well known heretofore, and the sheeting utilizing its retroreflectivity has been widely used in the fields of application as above-named. In particular, utilization of retroreflective sheeting for making various kinds of authentication stickers is increasing in recent years.

As such retroreflective sheeting, enclosed lens-type retroreflective sheeting and encapsulated lens-type retroreflective sheeting using micro-glass beads on which a specular reflective layer is provided, are well known.

Examples of enclosed lens-type retroreflective sheeting are disclosed in JP Sho59(1984)-71848A (corres. to US Patent Nos. 4,721,649 and 4,725,494) to Belisle, et al. which are to be referred to for specific explanation of the sheeting. Examples of encapsulated lens-type retroreflective sheeting are disclosed in detail in JP Sho40 (1965)-7870B (= U. S. Patent No. 3,190,178) to McKenzie, JP Sho52(1977)-110592A (= U. S. Patent No. 4,025, 159) to McGrath, and JP Sho62(1987)-121043A (=U. S. Patent No. 5, 064, 272) to Bailey, et al, which are to be referred to for specific explanation.

Furthermore, various techniques have been proposed for prevention of tampering of such retroreflective sheeting.

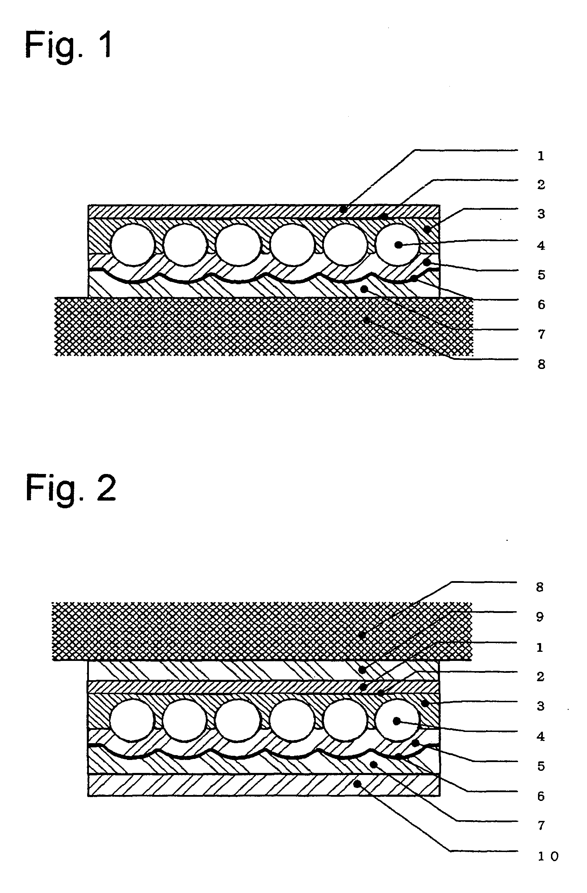

International Publication WO 01/02883 to Bacon discloses provision of novel removable retroreflective sheeting whose adhesive layer (17 in Fig. 1) adjacent to the specular reflective layer comprises an organofunctional coupling agent. However, according to the technology as disclosed in said patent, in the occasion of the removal, the specular reflective layer remains on the side of those micro-glass beads to retain retroreflectivity of the sheeting and can be re-used when a new adhesive layer is laminated thereon. This is undesirable from the standpoint of preventing tampering.

Also JP Hei10(1998)-512818A to Faykish discloses a security laminate comprising
(a) protective layer having first and second surfaces;
(b) embossed layer bonded to at least a portion of the second surface of the protective layer;
(c) reflective layer bonded to at least a portion of the embossed layer/protective layer composite;
(d) adhesion enhancing layer bonded to a portion of the reflective layer/embossed layer/protective layer composite; and
(e) adhesive bonded to at least a portion of the adhesion enhancing layer/reflective layer/embossed layer/protective layer composite
wherein the bond between the reflective layer and the adhesion enhancing layer and the bond between the adhesion enhancing layer and the adhesive are each more tenacious than the bond between the reflective layer and embossed layer and further wherein the bond between the adhesive and the adhesion enhancing layer is more tenacious than the bond between the adhesive and reflective layer (cf. Claim 1).

The invention discloses to cause destruction of the security laminate by partial installment of reflective layer as a part of hologram, adhesive layer and adhesion enhancing layer, to achieve tampering-prevention effect. However, it discloses nothing about tampering-preventing technology relating to retroreflective sheeting.

### Disclosure of the Invention

Various authentication stickers using the above retroreflective sheeting are finding increasing utility particularly as reflective stickers to be stuck on vehicles, because of their excellent visibility at night.

For example, on stickers which are called third plates, same vehicle registration numbers as those given on number plates of cars are printed. Such a third plate is stuck on the inner side of a vehicle window and is useful to prevent theft of the number plate mounted on outer side of the vehicle.

Use of the retroreflective sheeting for "validation" stickers certifying payment of vehicle tax (road fund license), which also are stuck on the inner side of vehicle windows similarly to third plates, is also increasing.

Furthermore, also for utilities other than vehicles, retroreflective sheeting which has very complex structure is less easily available and more difficult of forgery compared to stickers made of ordinary paper or plastic sheet or stickers with hologram layer, and for this reason is often used for authentication stickers or the like.

However, attempts to tamper authentication stickers used for such purposes are occurring by peeling them off from the originally stuck places and putting tem to other usages, and drawing attention as a problem to be solved.

An object of the present invention is to provide retroreflective sheeting which achieves tampering-preventing effect or re-peeling -preventing effect, by rendering traces of peeling once stuck authentication sticker off clearly recognizable, when the once stuck authentication sticker is peeled off.

Moreover, where a retroreflective authentication sticker as above is mounted on, for example, a glass window of a vehicle, even when it is provided with a tampering-preventing layer, there is a problem that the action of said layer tends to be deteriorated in long use, as it is exposed to sunlight and high temperature.

The present invention aims at provision of tampering-preventing stickers which are resistant to such prolonged use under high temperatures and are capable of maintaining stable tampering-preventing effect.

As an example of enclosed lens-type retroreflective sheeting structure useful for the present invention, a retroreflective sheeting comprising, by the order seen from the front side of the sheeting, a surface layer, binder layer, micro-glass beads, focusing layer, specular reflective layer and an adhesive layer can be cited. For the use by adhering it onto inside surface of glass or the like, the adhesive layer may be provided on the surface layer.

Also as an example of encapsulated lens-type retroreflective sheeting structure useful for the present invention, a retroreflective sheeting comprising, by the order seen from the front side of the sheeting, a surface layer, air layer, micro-glass beads, specular reflective layer, binder layer, support layer and an adhesive layer can be cited. Said surface layer and binder layer are partially bonded, taking a hermetically sealed cellular structure to form an air layer. Where the sheeting is to be adhered onto inside surface of glass or the like, the adhesive layer may be provided on the surface layer.

It is also preferable to supply these retroreflective sheetings useful for the present invention in an embodiment of exposing the specular reflective layer, to enable addition of various functions to inside the reflective sheetings.

For utilities which require processing of the specular reflective layer, the sheetings are preferably in embodiments free of an adhesive layer. After processing the specular reflective layer, an adhesive layer can be provided in the manner suitable for intended utility.

Examples of the resin useful for the surface layer, support layer and binder layer in the retroreflective sheetings as above-described include, acrylic resin, methacrylic resin, alkyd resin, polyester resin, polyurethane resin, epoxy resin, polystyrene resin, polyvinyl chloride resin and polyvinyl ether resin, while useful resins are not limited thereto. Of these, acrylic resin is particularly preferred.

Examples of the resin useful for the adhesive layer in the retroreflective sheeting as above-described include acrylic resin, methacrylic resin, alkyd resin, polyester resin, polyurethane resin, epoxy resin, silicone resin, natural rubber, synthetic rubber and polyvinyl ether resin, while useful resins are not limited thereto. Of these, acrylic resin is particularly preferred.

Examples of the specular reflective layer useful for the retroreflective sheeting as above-described include aluminum, silver, nickel and copper, while not limited thereto. Of these, aluminum is particularly preferred because of light sheeting appearance.

The retroreflective sheeting provided with a destructive layer according to the invention is a retroreflective sheeting comprising at least a surface layer, retroreflective element layer and adhesive layer. The sheeting is characterized in that at least one destructive layer is provided between those layers constituting the retroreflective sheeting, that the resin constituting the destructive layer is alicyclic polyolefin resin or alicyclic acrylic resin, and in the event of peeling off the retroreflective sheeting once stuck on a substrate from the substrate, that the peeling takes place by interfacial separation of the destructive layer from a layer which is in intimate contact therewith or destruction of the destructive layer.

The position at which the destructive layer is installed is not subject to specific limitation, but it must be installed in such a manner as, when the retreflective layer once stuck on a substrate is peeled off from the substrate, the peeling takes place by interfacial separation of the destructive layer from a layer which is in intimate contact therewith or destruction of the destructive layer.

In particular, with respect to enclosed lens-type retroreflective sheeting and encapsulated lens-type retroreflective sheeting, provision of the destructive layer between micro-glass beads and the specular reflective layer is preferred for the purpose of prevention of tampering, because such a sheeting loses its retroreflectivity after its peeling off.

Furthermore, any of the layers constituting the sheeting may be same as the destructive layer, so long as the sheeting is so formed that its peeling from the substrate to which it was stuck once, takes place by interfacial separation of the destructive layer from the layer in intimate contact therewith or by destruction of the destructive layer.

In particular, a printed layer may be given the breakable property according to the present invention, which is installed on upper surface or lower surface of the protective layer either partially or over the whole, depending on necessity of individual occasion. Or a part of a multi-colored printed layer may be used as the destructive layer. The structure of using the printed layer as the destructive layer is preferred for easy visual determination whether the sheeting has been peeled off.

Thickness of the destructive layer can be suitably determined according to the position of its installation. Normally preferred thickness may range, for example, 0.1 - 100 µm. With a retroreflective sheeting in which the destruction takes a form of interfacial separation of the destructive layer from the layer in intimate contact therewith, the destructive layer is not required to be very thick, which may range 0.1 - 10 µm, in particular, 0.1 - 5 µm. When the peeling off is to be done by destruction of the destructive layer, the thickness may range 1 - 100 µm, in particular, 5-50 µm. Where the thickness is less than 0.1 µm, the destructive layer does not function satisfactorily and peeling becomes incomplete. Whereas, when the thickness exceeds 100 µm, such inconveniences are invited that destruction is apt to take place before adhesion of the sheeting to substrate or that deformation at the site of the destructive layer tends to occur during transportation or storage.

As a method for providing the destructive layer, coating, printing, lamination or spraying method can be suitably adopted.

The resin useful for forming the destructive layer is alicyclic polyolefin resin or alicyclic acrylic resin, which should be adequately selected according to the form of destruction.

Where cyclopentane resin is used as the resin to make the destructive layer cyclopentane resin (following formula 1a), bicyclopentane resin (following formula 1b) and cyclopentanorbornene resin (following formula 1c) are suitable; and as vinylcyclopentane resins, vinylcyclopentane resin (following formula 2a), vinylcyclopentanorbornene resin (following formula 2b); cyclohexadiene resin (following formula 3a) or cyclohexane resin (following formula 3b) are preferred. 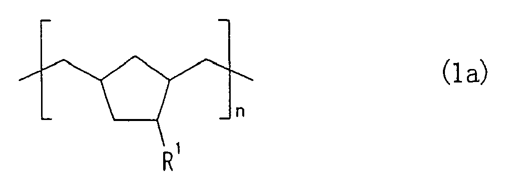 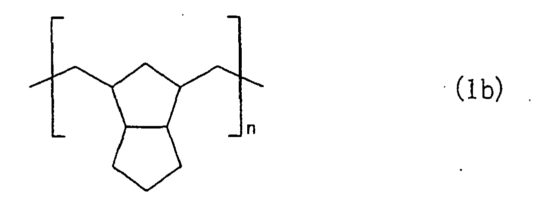 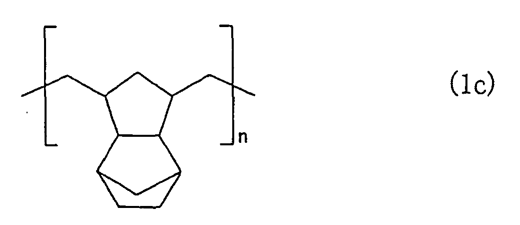 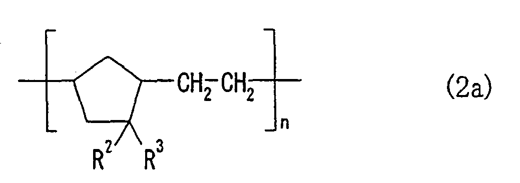 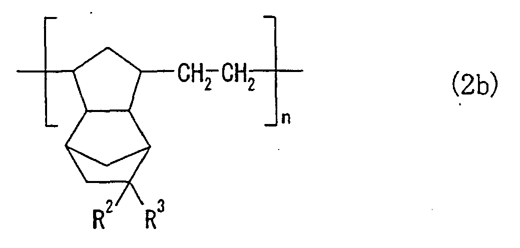 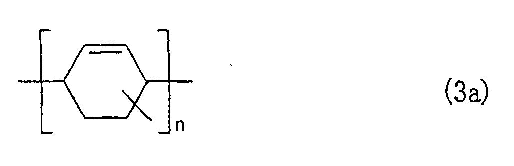 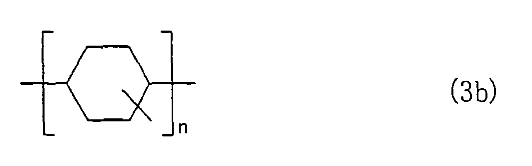 in the above formulae, the substituent R¹ is preferably cyclohexyl, and substituents R² and R³ each is preferably hydrogen (-H), methyl (-CH₃), cyano (-CN), methoxycarbonyl (-COOCH₃), ethoxycarbonyl (-COOC₂H₅), cyclohexyloxycarbonyl (-COO(cyclo-C₆H₁₁) or n-butoxycarbonyl (-COO(n-C₄H₉)).

As alicyclic acrylic resins constituting the destructive layer, methacrylic acid ester resin (following formula 4) and the like are preferred.

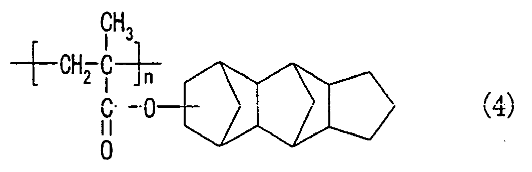

Cyclopentane resin (above formula 1a) is normally obtained through the steps of forming an intermediate polymer by subjecting a cycloolefin such as norbornene, dicyclopentadiene, tetracyclododecene or the like to ring-opening polymerization in the presence of a metathesis catalyst comprising a transition metal compound such as tungsten or molybdenum and alkylaluminum; and saturating the double bonds in the intermediate polymer by hydrogenation. As a commercial product, ZEONEX (tradename, Zeon Corporation) can be used.

It is particularly preferred that the substituent R¹ in the above cyclopentane resin (above formula 1a) is cyclohexyl. A structure wherein R¹ is hydrogen shows increased crystallinity and its transparency tends to decrease. When the substituent R¹ is cyclohexyl or the like, an amorphous polymer is formed which has improved transparency and is particularly preferred for use for forming the destructive layer of the present invention.

Vinylcyclopentane resin (above formula 2a) and vinylcyclopentanorbornene resin (above formula 2b) are usually obtained through the steps of subjecting norbornene derivatives having methacrylic side chains, which are obtained from norbornene and methyl methacrylate, to ring-opening polymerization using tungsten-aluminum compound catalyst to form an intermediate compound, and saturating vinyl groups in the intermediate compound by hydrogenation. Such compound has ester group structure and tends to have relatively high intimate adherability to other resin layers or specular reflective layer which constitute the retroreflective sheeting. As commercial product, ARTON (tradename, JSR Kabushiki Kaisha) can be used.

The substituents R² and R³ in these vinylcyclopentane resin (above formula 2a) and vinylcyclopentanorbornene resin (above formula 2b) can be selected from hydrogen (-H), methyl (-CH₃), cyano (-CN), methoxycarbonyl (-COOCH₃), ethoxycarbonyl (-COOC₂H₅), cyclohexyloxycarbonyl (-COO(cyclo-C₆H₁₁) and n-butoxycarbonyl (-COO(n-C₄H₉)). Use of these is particularly preferred to secure favorable optical characteristics such as transparency and refractive index, and heat resistance.

Furthermore, particularly preferred cyclohexadiene resins (above formulae 3a and 3b) are poly-1,3-cyclohexadiene resin and polycyclohexane resin. These cyclohexadiene polymers are obtained through living anionic polymerization of 1,3-cyclohexadiene, using a catalyst comprising alkyl lithium and amine compound. In particular, poly-1,3-cyclohexadiene resin is preferred in respect of heat resistance.

Preferred alicyclic acrylic resins are methacrylic acid ester polymers (above formula 4), in particular, copolymers of tricyclodecyl methacrylate and methyl methacrylate. As commercialized product, OPTOREZ OZ-1000 (tradename, Hitachi Chemical Co., Ltd. can be used. Copolymers of benzyl methacrylate, tricyclodecaniel methacrylate and methyl methacrylate, which show high heat resistance, can also be used.

It is preferred to suitably adjust molecular weight and crosslinking density of these resins useful for the destructive layer, so as to facilitate occurrence of peeling upon destruction of the layer.

Adequate molecular weight ranges, as converted to molecular weight of styrene, 1,000 - 100,000, preferably 5,000 - 50,000. The molecular weight must be suitably adjusted by molecular structure or polymerization method.

It is also possible to reduce cohesive force of the destructive layer by addition of other resin(s) to the resin constituting the destructive layer. As resin which can be used for that purpose, various cellulose compounds such as cellulose acetate butyrate; and various waxes such as aliphatic hydrocarbon wax, fatty acid ester wax, saturated aliphatic acid wax, saturated alcohol wax and metallic soap can be named.

As examples of aliphatic hydrocarbon wax, polyethylene wax, polypropylene wax, microcrystalline wax, paraffin wax and fischertrops wax can be named. Examples of fatty acid ester wax include sazole wax, montanic acid ester wax, carnauba wax, rice wax, bees wax and candelilla wax. Examples of saturated aliphatic acid wax include stearic acid and montanic acid. Examples of saturated alcohol wax include stearyl alcohol and behenyl alcohol. As examples of metallic soap, calcium stearate and zinc stearate can be named. These waxes can be added in an amount ranging from 1 100 wt parts per 100 wt parts of the resin constituting the destructive layer.

Furthermore, preferably light-transmissive, organic or inorganic filler may be added to the above resin(s). Examples of useful inorganic filler include glass powder, silicon dioxide, titanium dioxide, aluminum hydroxide and magnesium hydroxide. Examples of organic filler include acrylic resin powder and the like.

Preferred particle size of such fillers ranges from 0.1 to 5 µm, and their preferred amount of addition ranges 1 - 100 wt parts per 100 wt parts of the resin constituting the destructive layer.

In the reflective sheeting wherein the destruction is caused by interfacial peeling of the destructive layer from a layer in intimate contact therewith, silicone resin, fluorine-containing resin or the like may be used each singly, or as mixed with above-named resin(s) which are useful to form the destructive layer.

Preferably, ultraviolet absorber, antioxidant and light stabilizer are added to the destructive layer to impart thereto durability or weatherability.

Examples of useful ultraviolet absorber include benzophenone UV absorber, salicylate UV absorber and benzotriazole UV absorber.

Examples of useful antioxidant include phosphorus antioxidant, sulfur antioxidant and phenolic antioxidant.

Examples of useful light stabilizer include hindered amine light stabilizers.

The retroreflective sheeting provided with a destructive layer according to the present invention comprises a surface layer and retroreflective element layer, characterized in that at least one destructive layer is provided between those layers constituting the retroreflective sheeting, that the resin constituting the destructive layer is alicyclic polyolefin resin or alicyclic acrylic resin and , where an adhesive layer is further provided in the retroreflective sheeting to adhere the latter to a substrate and when the sheeting is peeled off from the substrate later, that the peeling takes place by interfacial separation of the destructive layer from a layer in intimate contact therewith and/or by destruction of the destructive layer.

In order to accomplish such peeling mechanism, the peeling strength between the destructive layer made of the specified resin(s) and said another layer which is in contact with the destructive layer must be designed to be less than that between those other layers constituting the sheeting.

Measurement of peeling strength is normally conducted by the method as specified by JIS Z0237.

In reflective sheeting in general, the adhesive (tackifier) to adhere the sheeting to substrate is designed to have the least peeling strength, which is, taking an example of aluminum substrate, 5 - 20 N(newton)/25 mm.

Alicyclic side chain or main chain structure constituting alicyclic polyolefin resin or alicyclic acrylic resin which form the destructive layer according to the invention can lessen the peeling strength from resin(s) constituting said other layers or from the metallic layer used for the specular reflective layer.

Peeling strength of the destructive layer according to the invention is preferably designed to be 0.1 - 15 N/25 mm.

It is undesirable that the peeling strength is less than 0.1 N/25 mm, which is apt to cause destruction at the destructive layer before the sheeting is adhered to substrate or cause deformation at the destructive layer during transportation or storage.

Again, when the peeling strength exceeds 15N/25 mm, peeling at the destructive layer becomes difficult to reduce tampering-preventing effect, which is undesirable.

It is particularly preferred that the destructive layer which is provided in the retroreflective sheeting of the present invention has a glass transition point (Tg) in the range of 90 - 190°C, in consideration of the maximum temperature conceivable for the environments under which the sheeting is used. It is undesirable for the layer to have a glass transition point less than 90°C, because the resin used for the destructive layer may undergo glass transition depending on environmental conditions of its use, increasing the adhesion strength of the layer undergoing the transition to other layer(s) or causing thermal deformation of the destructive layer itself. Whereas, resins having glass transition point exceeding 190°C have complex resinous structures which reduce their solvent-solubility in the occasion of providing the destructive layer, which also is undesirable.

It is also preferred for the destructive layer to be provided in the retroreflective sheeting according to the present invention, to have a total light transmission of 75 -99%. Total light transmission less than 75% is undesirable because of reduced retroreflectivity.

When alicyclic polyolelfin resin or alicyclic acrylic resin is used as the resin constituting the destructive layer provided in the retroreflective sheeting of the present invention, due to their alicyclic structure a destructive layer having total light transmission exceeding 75% can be easily obtained.

Furthermore, alicyclic polyolefin resin or alicyclic acrylic resin which are used to form the destructive layer in the present invention have been normally used for optical utilities in general and are particularly preferred for the retroreflective sheeting of the present invention for use in the authentication stickers to prevent tampering.

The retroreflective sheeting provided with a destructive layer according to the present invention comprises at least a surface layer, retroreflective layer and an adhesive layer, in which at least one destructive layer is provided between those layers constituting the retroreflective sheeting, said destructive layer being made of alicyclic polyolefin resin or alicyclic acrylic resin, and, when the retroreflective sheeting once stuck on a substrate is then peeled off from the substrate, the peeling takes place by interfacial separation of the destructive layer from a layer which is adjacent to the destructive layer and/or by destruction of the destructive layer.

Because the peeling strength of the destructive layer in the present invention is designed to fall within a range of 0.1 - 15N/25 mm, above peeling is designed to take place in the most desirable form.

### Brief Explanation of drawings

Fig. 1 is a sectional view showing an example of known enclosed lens-type retroreflective sheeting structure.

Fig. 2 is a sectional view showing another example of known enclosed lens-type retroreflective sheeting structure.

Fig. 3 is a sectional view showing a preferred embodiment of enclosed lens-type retroreflective sheeting lacking an adhesive layer and being provided with a destructive layer according to the present invention.

Fig. 4 is a sectional view showing a preferred embodiment of enclosed lens-type retroreflective sheeting in which a destructive layer is provided according to the present invention.

Fig. 5 is a sectional view showing another preferred embodiment of enclosed lens-type retroreflective sheeting in which a destructive layer is provided according to the present invention.

Fig. 6 is a sectional view showing still another preferred embodiment of enclosed lens-type retroreflective sheeting in which a destructive layer is provided according to the present invention.

Fig. 7 is a sectional view showing still another preferred embodiment of enclosed lens-type retroreflective sheeting in which a destructive layer is provided according to the present invention.

Fig. 8 is a sectional view showing a preferred embodiment of encapsulated lens-type retroreflective sheeting in which the destructive layer is provided according to the present invention.

### Working Embodiments of the Invention

Preferred embodiments of the present invention are explained, referring to the drawings.

Fig. 1 shows an example of known enclosed lens-type retroreflective sheeting structure, which is shown for comparison with the present invention.

The retroreflective sheeting is composed of, from the top, a surface layer (1), printed layer (2) provided at a lower part the surface layer, holding layer (3) for holding many micro-glass beads (4), focus-adjusting layer (5) which is provided for effectively retroreflecting entering light, and a specular reflective layer (6) for specularly reflecting the light, the layers (3 - 6) constituting a retroreflective element layer, and the sheeting is adhered by means of an adhesive layer (7) which is provided on the back of the specular reflective layer (6).

Fig. 2 shows another example of a known enclosed lens-type retroreflective sheeting structure which is shown for comparison with the present invention.

The retroreflective sheeting is stuck on a light-transmissive substrate by a light-transmissive adhesive layer (9) which is provided on the surface of the sheeting.

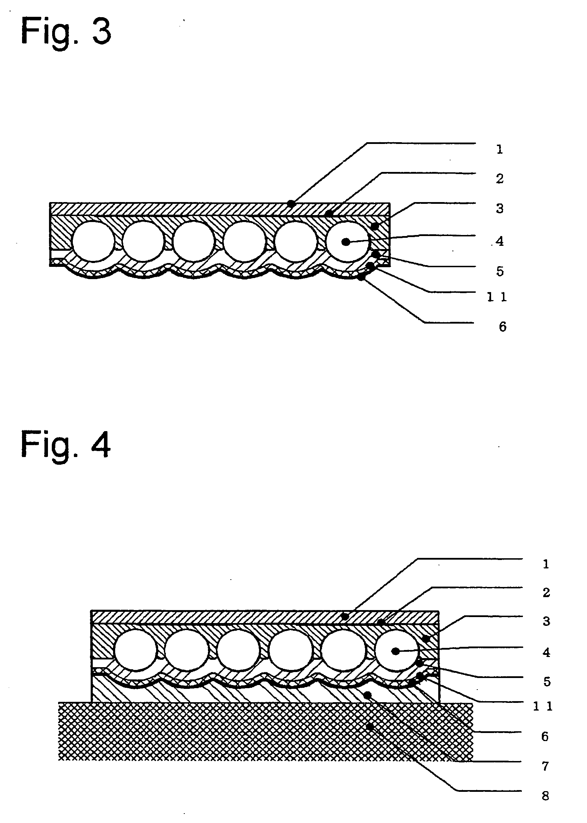

Fig. 3 shows a preferred embodiment of an adhesive layer-free, enclosed lens-type retroreflective sheeting in which a destructive layer is provided according to the present invention.

A light-transmissive destructive layer (11) is provided between a focus-adjusting layer (5) and specular reflective layer (6). As further illustrated in Fig. 4, an adhesive layer is further provided on the retroreflective sheeting. After the sheeting is stuck on a substrate (8) via the adhesive layer (7) which is provided on the rear surface of the sheeting, when peeling of the sheeting is attempted, the peeling takes place at the destructive layer to cause separation of the micro-glass beads from the specular reflective layer, and the sheeting loses its retroreflective performance.

Fig. 4 shows an embodiment of Fig. 3 to which an adhesive layer is provided. A light-transmissive destructive layer (11) is provided between the focus-adjusting layer (5) and the specular reflective layer (6). The sheeting is stuck on a substrate (8) via the adhesive layer (7) which is provided on the rear surface thereof. In the occasion of peeling this sheeting off, the peeling takes place at the destructive layer to separate the micro-glass beads from the specular reflective layer, and the sheeting loses its retroreflective performance.

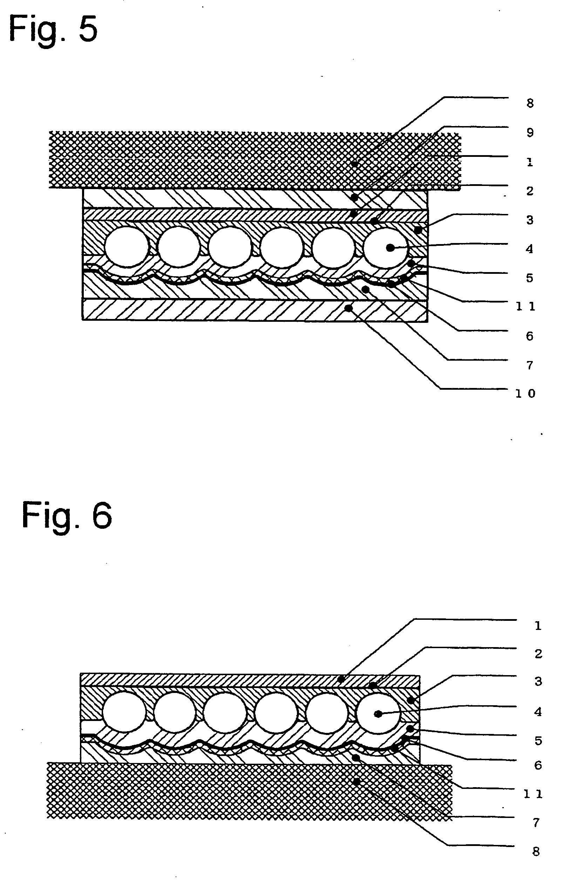

Fig. 5 shows another favorable embodiment of enclosed lens-type retroreflective sheeting which is provided with a destructive layer according to the present invention.

A light-transmissive destructive layer (11) is installed between a focus-adjusting layer (5) and specular reflective layer (6), and the sheeting is stuck on a transparent substrate (8) via an adhesive layer (9) provided on the front surface thereof. In the occasion of peeling this sheeting off, the peeling takes place at the destructive layer (11) to separate the micro-glass beads from the specular reflective layer, and the sheeting loses its retroreflective performance.

In this embodiment, the specular reflective layer (6) is protected from exposure by the adhesive layer (7) provided on the rear surface and a back protective layer (10).

Fig. 6 shows still another favorable embodiment of enclosed lens-type retroreflective sheeting provided with a destructive layer according to the present invention.

The light-transmissive destructive layer (11) is provided between the adhesive layer (7) and the specular reflective layer (6), and the sheeting is stuck on the substrate (8) via the adhesive layer (7) provided on the rear surface thereof. When this sheeting is peeled off, the peeling takes place at the destructive layer (11). In that occasion, the specular reflective layer (6) is partially torn as pulled by the destructive layer (11), and retroreflective performance of the sheeting is heavily damaged to a level unfit for practical use.

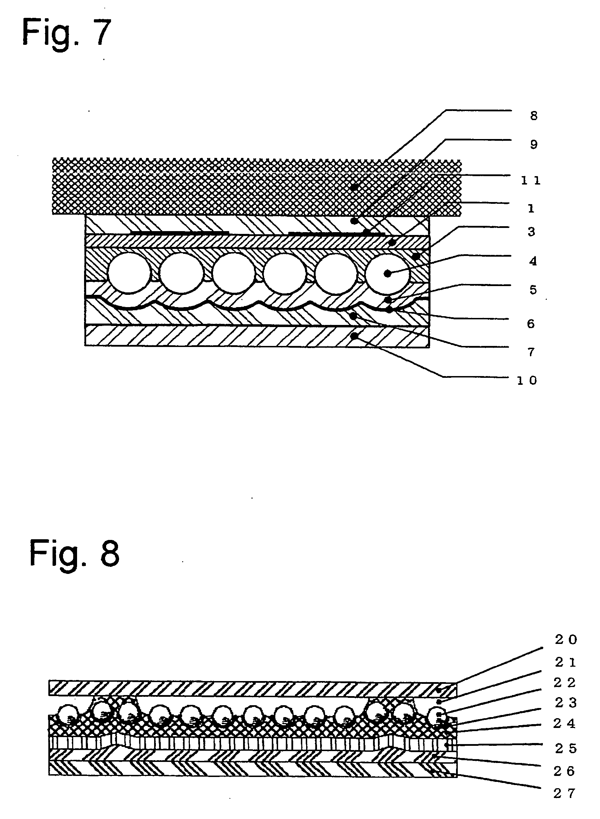

Fig. 7 shows another favorable embodiment of enclosed lens-type retroreflective sheeting provided with a destructive layer according to the present invention.

The retroreflective sheeting of Fig. 7 is composed of a surface layer(1), destructive layer (11) provided on top of the surface layer, holding layer (3) to hold many micro-glass beads (4), focus-adjusting layer (5) which is provided for effectively retroreflecting entering light and a specular reflective layer (6) for specularly reflecting light, in which the layers (3 - 6) constitute a retroreflective element layer which is adhered to a back-protective layer (10) which protects the specular reflective layer, via the adhesive layer (7). Also the surface layer (1) is stuck on a transparent substrate (8) by another adhesive layer (9).

In the embodiment as illustrated in Fig. 7, a destructive layer (11) may be provided by printing. Its peeling strength is designed to be less than that of the adhesive layer (9). When the sheeting is peeled off, the peeling is designed to take place either by destruction of, or interfacial separation at, the destructive layer (11), to leave clear trace or proof of the peeling off.

Fig. 8 shows another favorable embodiment of encapsulated lens-type retroreflective sheeting provided with a destructive layer according to the present invention.

From the top of the drawing, a protective layer (20), air layer (21), binder layer (24) holding many micro-glass beads (22), support layer (25) to support the binder layer and specular reflective layer (23) which specularly reflects light, said layers (21 - 25) constituting a retroreflective element layer, adhesive layer (26) provided on the rear surface of the sheeting and a substrate (27) to which the sheeting is to be stuck, are shown.

In Fig. 8, the binder layer (24) is designed to have a peeling strength less than that of the adhesive layer (26), so that the binder layer acts as a destructive layer when the retroreflective sheeting once stuck on the substrate is peeled off. The peeling takes place at the binder layer, and the function of retroreflective sheeting is lost.

### Examples

Hereinafter the present invention is explained still more specifically, referring to working examples.

Retroreflective sheetings according to the present invention were evaluated by the following test methods.
1) Peeling strength
In an embodiment wherein an adhesive layer was provided on the specular reflective layer side, 2 mm-thick aluminum plate was used as the substrate to which each retroreflective sheeting to be tested was adhered, and in an embodiment wherein an adhesive layer was provided on the surface layer side, an acrylic resin plate was used. Release paper on each retroreflective sheeting to be tested was peeled off, and the test piece was stuck on the substrate with a 2 kg-roller following JIS Z0237, thereafter stored for 3 days under the conditions of temperature, 23°C and relative humidity, 60%. Peeling strength of so stuck sheetings was measured in accordance with JIS Z0237.
2) Peeled state
The site of peeling off and the peeled state of those test pieces after the above test were visually observed, and the appearance was evaluated according to the following standard;

| Rank | Peeled State |
|---|---|
| A | Peeling took place at the destructive layer. |
| B | Partial peeling took place at the destructive layer. |
| C | Peeling did not take place at the destructive layer, or the retroreflective sheeting was torn. |

3) Retroreflection performance test
Test pieces of 100 mm x 100 mm size each were measured of their retroreflective performance from the substrate side surface, with retroreflection performance tester, "Model 920" manufactured by Advanced Retro Technology Co. The measurements were made 5 times following JIS Z-9117, at an angular conditions of: observation angle of 0.2° and entrance angle of 5°, and the average values were shown as the retroreflection performance.
4) Heat resistance test
The test pieces as stuck on the aluminum plate, as used in the peeling test, were given a heat-treatment in a hot air current dryer whose temperature was controlled to 80°C. for 20 days.

### Example 1

On the surface layer of a 38 µm-thick transparent polyethylene terephthalate film (SEW-38, tradename, Teijin Limited), a trademark logo of 7 mm in diameter was gravure printed using a printing ink formed by agitation-mixing 100 parts by weight of vinyl chloride-vinyl acetate copolymer (VC MEDIUM S, tradename, Dainippon Ink And Chemicals Incorporated) with 6.5 parts by weight of a colorant formed by mixing said VC MEDIUM S with carbon black (VC SUMI, tradename, Dainippon Ink And Chemicals Incorporated), which was dried to provide a printed layer of about 1 µm in thickness.

Successively a mixture of 100 parts by weight of an acrylic resin solution (RS-3100, tradename, Nippon Carbide Industries Co., Inc.) with 12 parts by weight of an isocyanate crosslinking agent (SUMIJULE N-75, tradename, Sumitomo Bayer Urethane Kabushiki Kaisha), which was formed by agitation, was applied onto the underside surface of the printer layer and dried to provide a 18 µm-thick holding layer. On this holding layer micro-glass beads (U-052, tradename, Kabushiki Kaisha Union) having a refractive index of 2.20 and an average particle diameter of about 35 µm were embedded to a depth by about one-half of the micro-glass bead diameter.

Then on the micro-glass bead-embedded surface, a resin solution formed by mixing and stirring 100 parts by weight of an acrylic resin solution (RS-5000, tradename, Nippon Carbide Industries Co., Inc.) with 5.5 parts by weight of a melamine crosslinking agent (MS-11, tradename, Sanwa Chemical Kabushiki Kaisha) was applied, and dried to provide a focus-adjusting layer having an average thickness of 14 µm.

On the focus-adjusting layer, a mixed and stirred 10 wt% toluene solution of alicyclic polyolefin resin (ARTON D4532, tradename, JSR Kabushiki Kaisha) was applied and dried to provide a destructive layer of 0.5 µm in average thickness.

On the surface of this destructive layer aluminum of purity not lower than 99.99% was deposited by vacuum evaporation method to provide a 0.1 µm-thick specular reflective layer, thus making an intermediate product 1.

Separately, an adhesive sheet 1 was prepared by applying onto a release paper (E2P-L-PE (P), tradename, LINTEC Corporation) a mixture formed by stirring together 80 wt parts of an acrylic tackifier (KP-1818, tradename, Nippon Carbide Industries Co., Inc.) with 20 wt parts of another acrylic tackifier (KP-1656, tradename, Nippon Carbide Industries Co., Inc.) and 0.76 wt part of a chelate-type crosslinking agent (CK-401, tradename, Nippon Carbide Industries Co., Inc.), and drying the same to provide an adhesive layer of 40 µm in thickness.

This adhesive sheet 1 and the vapor-deposited aluminum-covered surface of the intermediate product 1 were stuck together to provide a retroreflective sheeting 1 according to the present invention. The retroreflective sheeting 1 was stuck on a 2 mm-thick aluminum plate for performance measurement, which was used as the test piece 1 for the peeling test.

### Example 2

Onto the front plane of the surface layer of the intermediate product 1 as prepared in above Example 1, the adhesive sheet 1 as prepared in Example 1 was adhered. Further, a 38 µm-thick polyethylene terephthalate sheet was adhered onto the specular reflective layer, using the same 40µm-thick acrylic tackifier as the one used for preparing the adhesive sheet 1 to provide a retroreflective sheeting 2 of the present invention.

The retroreflective sheeting 2 was stuck on a 2 mm-thick acrylic resin plate for performance measurement so that it would retroreflect through the acrylic resin plate, and was used as the test piece 2 for the peeling test.

### Example 3

A retroreflective sheeting 3 was prepared by repeating Example 2 except that a norbornene resin (ZEONEX 480, tradename, Zeon Corporation) was used as the resin constituting the destructive layer. So formed retroreflective sheeting 3 was stuck on a 2 mm-thick aluminum plate for performance measurement, which was used as the test piece 3 for the peeling test.

### Example 4

A retroreflective sheeting 4 was prepared by repeating Example 2 except that an alicyclic acrylic resin (OPTOREZ OZ1000, tradename, Hitachi Chemical Co., Ltd.) was used as the resin constituting the destructive layer. So formed retroreflective sheeting 4 was stuck on a 2 mm-thick aluminum plate for performance measurement, which was used as the test piece 4 for the peeling test.

### Example 5

A retroreflective sheeting 5 was prepared by repeating Example 1, except that the destructive layer was provided on the rear surface of the surface layer instead of providing it between the focus-adjusting layer and specular reflective layer. So formed retroreflective sheeting 5 was stuck on a 2 mm-thick aluminum plate for performance measurement, which was used as the test piece 5 for the peeling test.

### Example 6

A retroreflective sheeting 6 was prepared by repeating Example 2, except that the destructive layer was provided on the rear surface of the surface layer instead of providing it between the focus-adjusting layer and specular reflective layer. The retroreflective sheeting 6 was stuck on a 2 mm-thick acrylic resin plate for performance measurement so that it would retroreflect through the acrylic resin plate, and was used as the test piece 6 for the peeling test.

### Example 7

On an encapsulated lens-type retroreflective sheeting (NIKKALITE ULS F812, tradename, Nippon Carbide Industries Co., Inc.), dots of each 5 mm in diameter were screen printed in grid pattern at regular intervals of 2 cm, using a mixed and stirred 15 wt% toluene solution of alicyclic polyolefin resin (ARTON D4532, tradename, JSR Kabushiki Kaisha). Drying the printed dots, a destructive layer of 2 µm in average thickness was provided.

Alphabets ABC of a size each 10 cm in vertical length were screen printed on the destructive layer, with a red ink (N-3515. tradename, Kabushiki Kaisha Tokushiki).

Separately, an adhesive sheet 1 was prepared by applying onto a release paper (E2P-L-PE (P), tradename, LINTEC Corporation) a mixture formed by stirring together 80 wt parts of an acrylic tackifier (KP-1818, tradename, Nippon Carbide Industries Co., Inc.) with 20 wt parts of another acrylic tackifier (KP-1656, tradename, Nippon Carbide Industries Co., Inc.) and 0.76 wt part of a chelate-type crosslinking agent (CK-401, tradename, Nippon Carbide Industries Co., Inc.), and drying the same to provide an adhesive layer of 40 µm in thickness.

The adhesive sheet 1 was stuck on the red ink-printed layer to provide a retroreflective sheeting 7 of the present invention. The retroreflective sheeting 7 was stuck on a 2 mm-thick acrylic resin plate for performance measurement so that it would retroreflect through the acrylic resin plate, and was used as the test piece 7 for the peeling test.

### Comparative Example 1

A retroreflective sheeting c1 was prepared by repeating Example 1, except that no destructive layer was provided. The retroreflective sheeting c1 was stuck on a 2 mm-thick aluminum plate for performance measurement, which was used as the test piece c1 for the peeling test.

### Comparative Example 2

A retroreflective sheeting c2 was prepared by repeating Example 2, except that no destructive layer was provided. The retroreflective sheeting c2 was stuck on a 2 mm-thick acrylic resin plate for performance measurement so that it would retroreflect through the acrylic resin plate, and was used as the test piece c2 for the peeling test.

### Comparative Example 3

On the surface layer of a 38 µm-thick transparent polyethylene terephthalate film (SEW-38, tradename, Teijin Limited), a trademark logo of 7 mm in diameter was gravure printed using a printing ink formed by agitation-mixing 100 parts by weight of vinyl chloride-vinyl acetate copolymer (VC MEDIUM S, tradename, Dainippon Ink And Chemicals Incorporated) with 6.5 parts by weight of a colorant formed by mixing said VC MEDIUM S with carbon black (VC SUMI, tradename, Dainippon Ink And Chemicals Incorporated), which was dried to provide a printed layer of about 1 µm in thickness.

Successively a mixture of 100 parts by weight of an acrylic resin solution (RS-3100, tradename, Nippon Carbide Industries Co., Inc.) with 12 parts by weight of an isocyanate crosslinking agent (SUMIJULE N-75, tradename, Sumitomo Bayer Urethane Kabushiki Kaisha), which was formed by agitation, was applied onto the underside surface of the printer layer and dried to provide a 18 µm -thick holding layer. On this holding layer micro-glass beads (U-052, tradename, Kabushiki Kaisha Union) having a refractive index of 2.20 and an average particle diameter of about 35 µm were embedded to a depth by about one-half of the micro-glass bead diameter.

Then on the micro-glass bead-embedded surface, a resin solution formed by mixing and stirring 100 parts by weight of an acrylic resin solution (RS-5000, tradename, Nippon Carbide Industries Co., Inc.) with 5.5 parts by weight of a melamine crosslinking agent (MS-11, tradename, Sanwa Chemical Kabushiki Kaisha) was applied, and dried to provide a focus-adjusting layer having an average thickness of 14 µm.

Further on the focus-adjusting layer, a mixture of 100 parts by weight of an acrylic resin solution (RS-1000, tradename, Nippon Carbide Industries Co., Inc.) with 108 parts by weight of CAB (tradename, Eastman Chemical Co.) solution (a butyl acetate solution containing 20% by weight of CAB in terms of solid) formed by agitation was applied, and dried to provide a destructive layer of 0.5 µm in average thickness.

On the surface of this destructive layer aluminum of purity not lower than 99.99% was deposited by vacuum evaporation method to provide a 0.1 µm-thick specular reflective layer, thus making an intermediate product c3.

The adhesive sheet 1 as prepared in Example 1 and the vapor-deposited aluminum-covered surface of the intermediate product c3 were stuck together to provide a retroreflective sheeting c3. So formed retroreflective sheeting c3 was stuck on a 2 mm-thick aluminum plate for performance measurement, which was used as the test piece c3 for the peeling test.

The results of the performance test of those test pieces as obtained in above Examples and Comparative Examples were as given in Table 1.

The peeling test of test piece 7 of Example 7 caused blanks of each 5 mm in diameter spaced by 2 cm in the alphabetical letters ABC, allowing ready recognition that the peeling took place.

**TABLE 1**

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Retroreflective Performance | | 0 | 3 | 3 | 3 | 25 | 0 | 0 | 45 | 38 | 0 |
| Peeling Test | before heat resistance test | 0.5 | 0.6 | 1.1 | 1.3 | 4.5 | 4.8 | 6.0 | 16.0 | 15.7 | 8.5 |
| | after heat resistance test | 0.8 | 1.0 | 1.7 | 2.0 | 5.0 | 5.1 | 6.7 | 16.1 | 15.8 | 12.2 |
| Peeled State | before heat resistance test | A | A | A | A | C | C | A | C | C | A |
| | after heat resistance test | A | A | A | A | C | C | A | C | C | A |

### Industrial Applicability

The invention relates to a retroreflective sheeting provided with a destructive layer, which is useful for signs such as traffic signs and construction signs; number plates on vehicles such as cars and motorcycles; safety materials such as clothing and life preservers; marking on signboards; various kinds of authentication stickers; reflector plates in visible light-, laser light-, or infrared light-reflection type sensors; and the like.

It relates to retroreflective sheeting useful for various kinds of authentication stickers or the like, which, when it is peeled off from a substrate to which it was once adhered, in an attempt to reuse it for other purposes, is broken because a destructive layer is provided as a part thereof, to render its reuse impossible. The invention provides, furthermore, retroreflective sheeting provided with a destructive layer, which is useful for tampering-preventing stickers which are durable to prolonged use under high temperatures and can maintain stable tampering-preventing effect.

## Claims

1. A retroreflective sheeting comprising a surface layer, a retroreflective element layer, and at least one destructive layer provided between the layers constituting the retroreflective sheeting, **characterized in that** the resin constituting said destructive layer is alicyclic polyolefin resin or alicyclic acrylic resin; and when the retroreflective sheeting which has been stuck on a substrate is peeled off from the substrate, that the peeling takes place at the interface of the destructive layer and the layer which is in intimate contact therewith and/or by destruction of the destructive layer.

2. A retroreflective sheeting according to Claim 1, **characterized in that** an adhesive layer is further provided on the light-entering side surface of the retroreflective sheeting or on the side opposite to the light-entering side of the retroreflective sheeting.

3. A retroreflective sheeting according to Claim 1 or 2, **characterized in that** the at least one destructive layer is provided between the surface layer and any one of the layers constituting the retroreflective element layer.

4. A retroreflective sheeting according to Claims 1 - 3, in which the resin consisting the destructive layer is selected from the group consisting of cyclopentane resins (following formulae 1a, 1b, 1c), vinylcyclopentane resins (following formula 2a), vinylcyclopentanorbornene resin (following formula 2b), and cyclohexadiene resin (following formula 3a) and cyclohexane resin (following formula 3b): 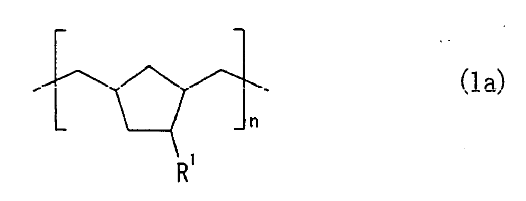 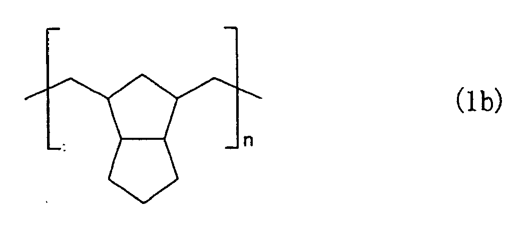 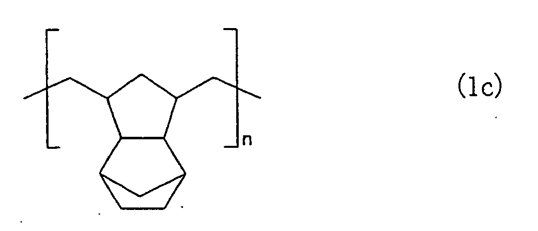 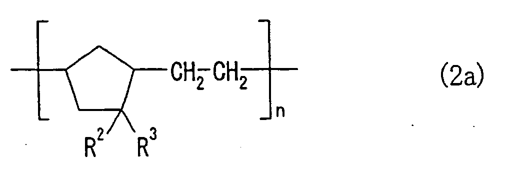 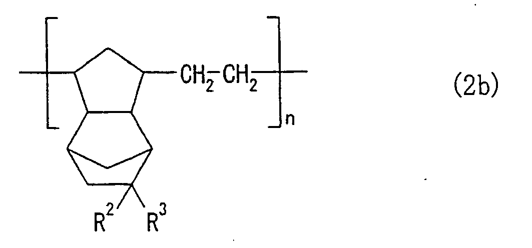 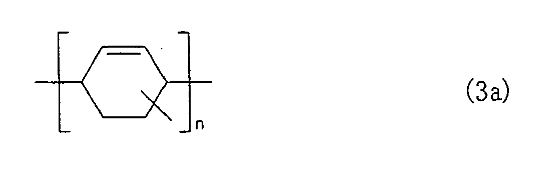 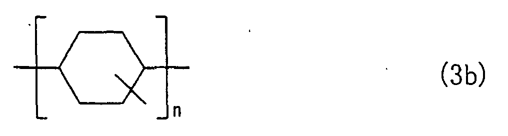 in the above formulae, the substituent R¹ is preferably cyclohexyl, and substituents R² and R³ each is preferably hydrogen (-H), methyl (-CH₃), cyano (-CN), methoxycarbonyl (-COOCH₃), ethoxycarbonyl (-COOC₂H₅), cyclohexyloxycarbonyl (-COO(cyclo-C₆H₁₁) or n-butoxycarbonyl (-COO(n-C₄H₉)).

5. A retroreflective sheeting according to Claims 1 - 3, in which the alicyclic acrylic resin constituting the destructive layer is a methacrylic acid ester resin (following formula 4)

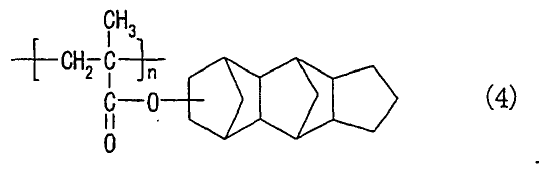

6. A retroreflective sheeting according to any one of Claims 1 - 4, in which the cyclohexadiene resins (above formulae 3a and 3b) are poly-1,3-cyclohexadiene resin and polycyclohexane resin.

7. A retroreflective sheeting according to any one of Claims 1 - 6, in which the retroreflective sheeting is enclosed lens-type or encapsulated lens-type whose retroreflective elements comprise micro-glass beads.

8. A retroreflective sheeting according to any one of Claims 1-7, which is **characterized in that** the destructive layer is installed between the micro-glass beads and specular reflective layer.

9. A retroreflective sheeting according to any one of Claims 1-8, which is **characterized in that** the destructive layer has a peeling strength ranging from 0.1 to 15 N/25 mm.

10. A retroreflective sheeting according to any one of Claims 1-9, which is **characterized in that** the destructive layer has a glass transition point (Tg) of 90 - 190°C.

11. A retroreflective sheeting according to any one of Claims 1 - 10, which is **characterized in that** the destructive layer has a percent transmission of total light ranging from 75 to 99%.

## Patentansprüche

1. Retroreflexions-Folie, umfassend eine Oberflächenschicht, eine Schicht eines Retroreflexions-Elements und mindestens eine Destruktivschicht, vorgesehen zwischen den Schichten, die die Retroreflexions-Folie bilden, **dadurch gekennzeichnet, dass** das Harz, aus dem die genannte Destruktivschicht besteht, ein alicyclisches Polyolefinharz oder ein alicyclisches Acrylharz ist; wobei, wenn die Retroreflexions-Folie, die auf ein Substrat aufgeklebt worden ist, von dem Substrat abgezogen wird, dann das Abziehen an der Grenzfläche der Destruktivschicht und der Schicht, die sich damit in innigem Kontakt befindet, und/oder durch Zerstörung der Destruktivschicht erfolgt.

2. Retroreflexions-Folie nach Anspruch 1, **dadurch gekennzeichnet, dass** weiterhin auf der Oberfläche der Licht-Eintrittseite der Retroreflexions-Folie oder auf einer Seite, die der Licht-Eintrittseite der Retroreflexions-Folie gegenüberliegt, eine Klebstoffschicht vorgesehen ist.

3. Retroreflexions-Folie nach Anspruch 1 oder 2, **dadurch gekennzeichnet, dass** die mindestens eine Destruktivschicht zwischen der Oberfläche und einer beliebigen der Schichten, die die Schicht des Retroreflexions-Elements bilden, vorgesehen ist.

4. Retroreflexions-Folie nach einem der Ansprüche 1 bis 3, wobei das Harz, aus dem die Destruktivschicht besteht, aus der Gruppe, bestehend aus Cyclopentanharzen (folgende Formeln 1a, 1b, 1c), Vinylcyclopentanharzen (folgende Formel 2a), Vinylcyclopentanorbornenharz (folgende Formel 2b) und Cyclohexadienharz (folgende Formel 3a) und Cyclohexanharz (folgende Formel 3b), ausgewählt ist: 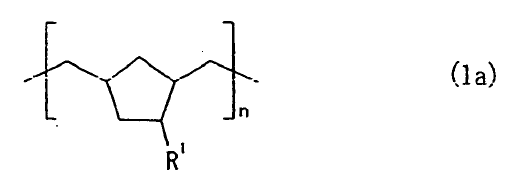 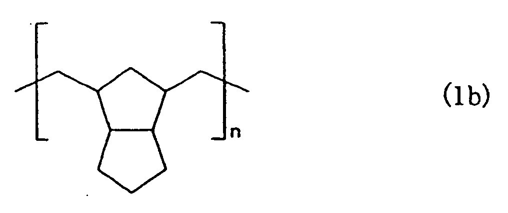 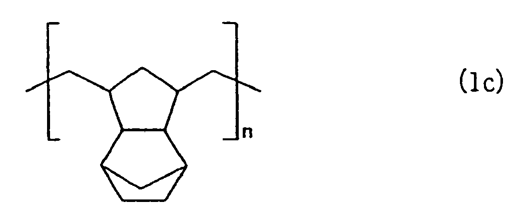 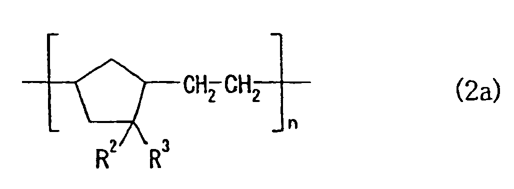 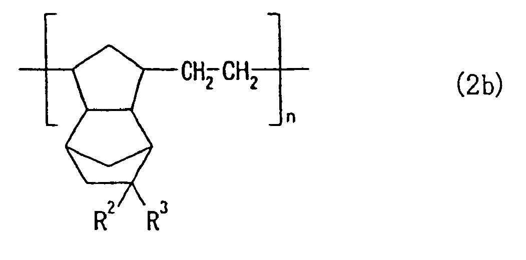 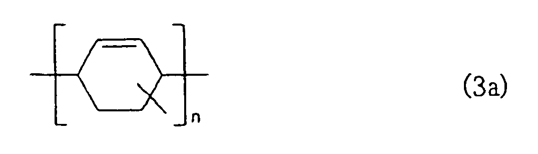 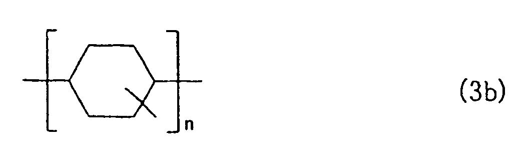 wobei in den obigen Formeln der Substituent R¹ vorzugsweise Cyclohexyl ist und die Substituenten R² und R³ vorzugsweise jeweils Wasserstoff (-H), Methyl (-CH₃), Cyano (-CN), Methoxycarbonyl (-COOCH₃), Ethoxycarbonyl (-COOC₂H₅), Cyclohexyloxycarbonyl (-COO(Cyclo-C₆H₁₁)) oder n-Butoxycarbonyl (-COO (n-C₄H₉)) sind.

5. Retroreflexions-Folie nach den Ansprüchen 1 bis 3, wobei das alicyclische Acrylharz, das die Destruktivschicht bildet, ein Methacrylsäureesterharz (folgende Formel 4) 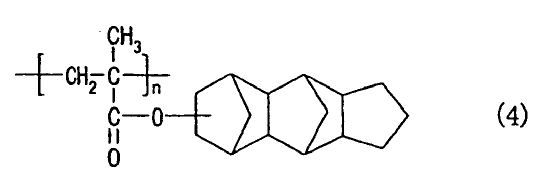 ist.

6. Retroreflexions-Folie nach einem der Ansprüche 1 bis 4, wobei die Cyclohexadienharze (obige Formeln 3a und 3b) Poly-1,3-cyclohexadienharz und Polycyclohexanharz sind.

7. Retroreflexions-Folie nach einem der Ansprüche 1 bis 6, wobei die Retroreflexions-Folie eine solche vom eingeschlossenen Linsen-Typ oder vom eingekapselten Linsen-Typ ist, dessen Retroreflexions-Elemente Mikroglasperlen umfassen.

8. Retroreflexions-Folie nach einem der Ansprüche 1 bis 7, **dadurch gekennzeichnet, dass** die Destruktivschicht zwischen den Mikroglasperlen und einer spiegelnden Reflexionsschicht installiert worden ist.

9. Retroreflexions-Folie nach einem der Ansprüche 1 bis 8, **dadurch gekennzeichnet, dass** die Destruktivschicht eine Abziehfestigkeit im Bereich von 0,1 bis 15 N/25 mm hat.

10. Retroreflexions-Folie nach einem der Ansprüche 1 bis 9, **dadurch gekennzeichnet, dass** die Destruktivschicht einen Glasübergangspunkt (Tg) von 90 bis 190°C hat.

11. Retroreflexions-Folie nach einem der Ansprüche 1 bis 10, **dadurch gekennzeichnet, dass** die Destruktivschicht eine prozentuale Durchlässigkeit für Gesamtlicht im Bereich von 75 bis 99% hat.

## Revendications

1. Feuille rétroréfléchissante comprenant une couche superficielle, une couche d'élément rétroréfléchissant et au moins une couche destructible placée entre les couches constituant la feuille rétroréfléchissante, **caractérisée en ce que** la résine constituant ladite couche destructible est une résine de polyoléfine alicyclique ou résine acrylique alicyclique ; et lorsque la feuille rétroréfléchissante, qui a été collée sur un substrat, est pelée du substrat, **en ce que** le pelage a lieu à l'interface de la couche destructible et de la couche qui est en contact intime avec celle-ci et/ou par destruction de la couche destructible.

2. Feuille rétroréfléchissante selon la revendication 1, **caractérisée en ce qu'**il est fourni de plus une couche adhésive sur la surface de la feuille rétroréfléchissante du côté entrée de la lumière ou du côté opposé au côté entrée de la lumière de la feuille rétroréfléchissante.

3. Feuille rétroréfléchissante selon la revendication 1 ou 2, **caractérisée en ce que** l'au moins une couche destructible est fournie entre la couche superficielle et n'importe quelle des couches constituant la couche d'élément rétroréfléchissant.

4. Feuille rétroréfléchissante selon la revendication 1 à 3, dans laquelle la résine constituant la couche destructible est prise dans le groupe constitué par des résines à base de cyclopentane (selon les formules la, 1b, 1c), résines à base de vinylcyclopentane selon la formule 2a), résine à base de vinylcyclopentanorbornène (selon la formule 2b) et résine à base de cyclohexadiène (selon la formule 3a) et résine à base de cyclohexane (selon la formule 3b) : 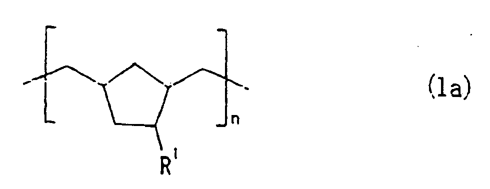 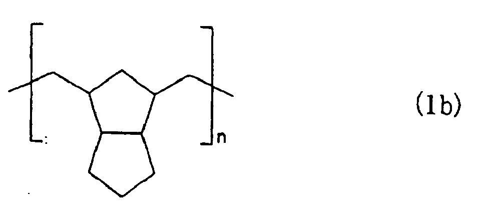 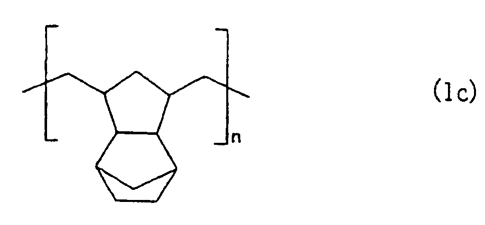 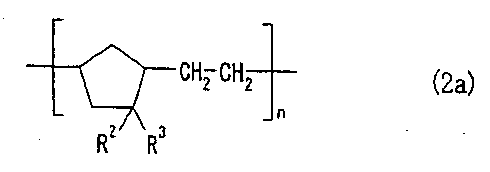 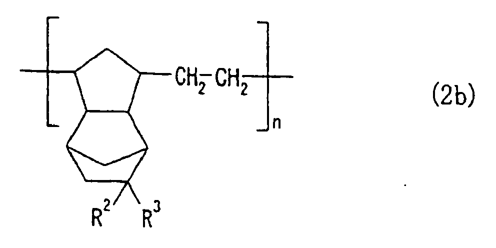 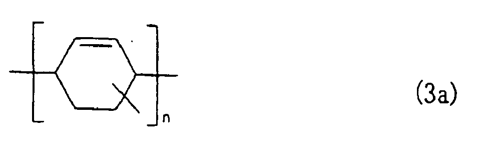 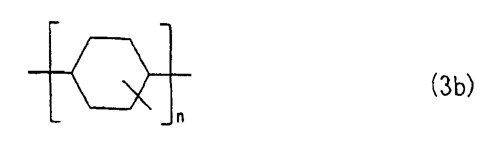 dans les formules ci-dessus, le substituant R¹ représente de préférence un groupe cyclohexyle et les substituants R² et R³ chacun représentent de préférence un atome d'hydrogène (-H), un groupe méthyle (-CH₃), cyano (-CN), méthoxycarbonyle (-COOCH₃), éthoxycarbonyle (-COOC₂H₅), cyclohexyloxycarbonyle (-COO(cyclo-C₆H₁₁) ou n-butoxycarbonyle (-COO(n-C₄H₉)).

5. Feuille rétroréfléchissante selon les revendications 1 à 3, dans laquelle la résine acrylique alicyclique constituant la couche destructible est une résine ester de l'acide méthacrylique (selon la formule 4)

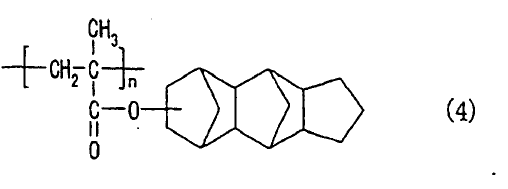

6. Feuille rétroréfléchissante selon l'une quelconque des revendications 1 à 4, dans laquelle les résines de cyclohexadiène (formules ci-dessus 3a et 3b) sont des résines à base de poly-1,3-cyclohexadiène et résines à base de polycyclohexane.

7. Feuille rétroréfléchissante selon l'une quelconque des revendications 1 à 6, dans laquelle la feuille rétroréfléchissante est de type lentille encloisonnée ou de type lentille encapsulée dont les éléments rétroréfléchissants renferment des microbilles de verre.

8. Feuille rétroréfléchissante selon l'une quelconque des revendications 1 à 7, qui est **caractérisée en ce que** la couche destructible est placée entre les microbilles de verre et la couche réfléchissante spéculaire.

9. Feuille rétroréfléchissante selon l'une quelconque des revendications 1 à 8, **caractérisée en ce que** la couche destructible présente une résistance au pelage dans le domaine de 0,1 à 15 N/25 mm.

10. Feuille rétroréfléchissante selon l'une quelconque des revendications 1 à 9, qui est **caractérisée en ce que** la couche destructible présente une température de transition vitreuse (Tg) de 90 à 190°C.

11. Feuille rétroréfléchissante selon l'une quelconque des revendications 1 à 10, **caractérisée en ce que** la couche destructible présente un pourcentage de transmission de la lumière totale allant de 75 à 99 %.
